# EUROPÄISCHE PATENTSCHRIFT

(11) **EP 3 090 628 B1**
(45) Veröffentlichungstag und Bekanntmachung des Hinweises auf die Patenterteilung: **13.11.2019**
(21) Anmeldenummer: 16167955.0
(22) Anmeldetag: 02.05.2016
(51) Int. Cl.: A01K 11/00, A01K 27/00, G06F 3/16

(54) **TIERMARKIERUNGSVORRICHTUNG FÜR EIN TIERMARKIERUNGSBAND**
ANIMAL MARKING DEVICE FOR AN ANIMAL MARKING TAPE
DISPOSITIF DE MARQUAGE D'ANIMAUX POUR UNE BANDE DE MARQUAGE

(30) Priorität: 04.05.2015 DE 102015106932
(43) Veröffentlichungstag der Anmeldung: 09.11.2016
(73) Patentinhaber: Strasser, Gerhard, 84494 Niederbergkirchen (DE)
(72) Erfinder: Strasser, Gerhard, 84494 Niederbergkirchen (DE)
(74) Vertreter: Rothkopf, Ferdinand

(56) Entgegenhaltungen:
- US-A- 3 585 743
- US-A- 4 480 589
- US-A- 5 176 106
- US-A- 5 818 354
- US-A- 5 979 095
- US-A1- 2006 261 958
- US-A1- 2014 283 423

## Beschreibung

### Hintergrund der Erfindung

Die Erfindung betrifft eine Tiermarkierungsvorrichtung für ein Tiermarkierungsband mit einem Befestigungsmittel zum Befestigen der Tiermarkierungsvorrichtung am Tiermarkierungsband.

Tiermarkierungen dienen zum Kennzeichnen von Tieren. Mit Tiermarkierungen können z.B. weitgehend gleichaussehende Tiere voneinander unterschieden werden. Ferner können damit Tiere so gekennzeichnet werden, dass sie auch von der Ferne besser zu identifizieren sind. Insbesondere ist dabei eine gut sichtbare, permanente Kennzeichnung zum Identifizieren eines Tieres hilfreich. Eine permanente Kennzeichnung des Tieres dient auch zum Nachweis des Eigentums oder zur zweifelsfreien Zuordnung des Tieres zu tierrelevanten Dokumenten. Allgemein bekannte Tierkennzeichnungen erfolgen mittels Beringung, Bemalung, Brandzeichen, implantierten Mikrochip-Transpondern, Ohrmarken mit Nummern und Chips oder auch mittels Tätowierungen.

Ferner sind ringförmige Tiermarkierungsbänder mit zugehörigen Tiermarkierungsvorrichtungen bekannt. Das Tiermarkierungsband wird dabei meist am Hals eines zugehörigen Tieres angebracht und dazu verwendet, eine gut sichtbare, individuelle Markierung bzw. Kennzeichnung des Tieres zu ermöglichen. Zum Anbringen am Hals des Tieres kann das Tiermarkierungsband mittels einer Schnalle bzw. eines Verschlusses geöffnet und auch wieder zu einer Ringform geschlossen werden.

### Das Tiermarkierungsband trägt dann in der Regel eine

Tiermarkierungsvorrichtung, die das Tiermarkierungsband umschließt bzw. umgreift. Diese Tiermarkierungsvorrichtung ist so von allen Seiten gut sichtbar und dabei mit einem Symbol versehen, meist zumindest einer Nummer oder einem Buchstaben. Das Symbol kann insbesondere von einem Besitzer des Tieres individuell gewählt und es können auch mehrere Tiermarkierungsvorrichtungen zu einer Einheit am Tiermarkierungsband kombiniert werden. Das zugehörige Tier ist so von anderen Tieren in einem Tierbestand zu unterscheiden.

Bei bekannten Tiermarkierungsbändern erfolgt das Anbringen der Tiermarkierungsvorrichtung an dem Tiermarkierungsband mittels "Einschlaufen" des geöffneten Tiermarkierungsbands in die Tiermarkierungsvorrichtung. Nach dem Einschlaufen umgreift die Tiermarkierungsvorrichtung einen Anfangsbereich der Längserstreckung des Tiermarkierungsbandes. Um die Tiermarkierungsvorrichtung dann auf dem Tiermarkierungsband an die gewünschte, insbesondere gut sichtbare Endposition zu bewegen, muss die das Tiermarkierungsband umgreifende Tiermarkierungsvorrichtung bis zu dieser Endposition weiter auf das Tiermarkierungsband aufgeschoben werden. Die Tiermarkierungsvorrichtung ist auf dem Tiermarkierungsband dabei zugleich mittels Reibschluss gehalten, wobei dieser Reibschluss ein Verrutschen der Tiermarkierungsvorrichtung an ihrer Endposition verhindern soll. Das Aufschieben der Tiermarkierungsvorrichtung vom Anfangsbereich des Tiermarkierungsbandes bis zur Endposition kann sich daher als vergleichsweise schwierig und kraftaufwändig erweisen. Das noch offene Tiermarkierungsband wird schließlich dem zugehörigen Tier angelegt und verschlossen, das Tier ist markiert. Bei einem Entfernen oder bei einer Änderung der Kennzeichnung des Tieres ist das Tiermarkierungsband wieder zu öffnen und die Tiermarkierungsvorrichtung ist von dem Tiermarkierungsband abzuziehen.

Zudem dient das Tiermarkierungsband auch als Träger von Sensoren und/oder Transpondern, die ebenfalls auf dem Tiermarkierungsband aufgeschoben bzw. "aufgeschlauft" sind. In der Regel muss ein derart angebrachter Sensor und/oder Transponder erst entfernt werden, um dann die Tiermarkierungsvorrichtung von dem Tiermarkierungsband abziehen zu können.

Aus US 5 818 354 A1 ist ein Tierhalsband mit einem Sensorenpaar zum Erfassen von Herzschlag und Temperatur eines Tieres bekannt. Dazu ist das Sensorenpaar mittels einer Elektronikeinheit am Tierhalsband gehalten. Die Elektronikeinheit umfasst ein zweiteiliges Gehäuse, das mittels einer Schraube zusammengehalten und am Tierhalsband befestigt ist. Die Schraube erstreckt sich zentral durch ein erstes Gehäuseteil des Gehäuses. An einem Randbereich eines zweiten Gehäuseteils des Gehäuses ist ein Einschaltknopf der Elektronikeinheit angeordnet. Zudem können ein Halsband-Sender und ein Halsband-Empfänger vorgesehen sein, mit denen anhand eines Tieridentifikationscodes ein bestimmtes Tier überwacht werden kann.

Aus US 2006 0261958 A1 ist ein Identifizierungsband bekannt, mit dem medizinische Informationen und/oder Kontaktinformationen seines Trägers wiedergegeben werden können. Dazu weist das Indentifizierungsband ein Band und eine Schließvorrichtung auf. Die Schließvorrichtung umfasst eine Grundplatte und ein Lagerungselement mit einer Öffnung zum Aufnehmen eines Informationsetiketts. Dabei ist das Lagerungselement derart zur Grundplatte hin zu sichern, dass das Band ortsfest dazwischen gehalten ist.

### Zugrundeliegende Aufgabe

Es ist eine Aufgabe der vorliegenden Erfindung, eine Tiermarkierungsvorrichtung für ein Tiermarkierungsband zu schaffen, die am zugehörigen Tier leichter anbringbar und entfernbar ist, insbesondere ohne am Tiermarkierungsband angebrachte Sensoren und/oder Transponder entfernen zu müssen.

### Erfindungsgemäße Lösung

Gemäß der Erfindung ist eine Tiermarkierungsvorrichtung für ein Tiermarkierungsband mit einem Befestigungsmittel zum Befestigen der Tiermarkierungsvorrichtung am Tiermarkierungsband gemäß Anspruch 1 geschaffen, bei der das Befestigungsmittel eine Ringform aufweist, um damit das Tiermarkierungsband zu umschließen. Erfindungsgemäß ist dabei die Ringform des Befestigungsmittels an ihrem Umfang wahlweise zu öffnen.

Die erfindungsgemäße Lösung beruht auf der Erkenntnis, dass es für eine Tiermarkierungsvorrichtung grundsätzlich schon vorteilhaft ist, wenn diese an ihrer Endposition das zugehörige Tiermarkierungsband mittels einer Ringform umgreifend gestaltet ist. Die Ringform stellt sicher, dass die Tiermarkierungsvorrichtung nicht vom Tiermarkierungsband abfallen kann, und auch, dass die Tiermarkierungsvorrichtung von allen Seiten gesehen werden kann. Damit eine solche Tiermarkierungsvorrichtung jedoch am Tiermarkierungsband befestigt werden kann, muss sie derzeit mit ihrer Ringform auf das Tiermarkierungsband in Richtung von dessen Längserstreckung aufgeschoben werden. Das Entfernen der Tiermarkierungsvorrichtung vom Tiermarkierungsband erfolgt durch Abziehen der Tiermarkierungsvorrichtung in Richtung der Längserstreckung. Dies ist ein Vorgang, bei dem aufgrund des Reibschlusses zwischen Tiermarkierungsvorrichtung und Tiermarkierungsband Probleme auftreten. Zum Aufschieben, Verschieben oder Abziehen ist insbesondere ein hoher Kraftaufwand nötig. Vor allem treten Probleme auf, wenn das Tiermarkierungsband von Tierhaaren und sonstigen Verunreinigungen verschmutzt und verklebt ist. Ein Verschieben oder Abziehen ist dann nur mit sehr großer Kraftanstrengung oder mit zeitaufwändigen Reinigungsmaßnahmen möglich.

An dem erfindungsgemäßen Tiermarkierungsband ist hingegen eine Tiermarkierungsvorrichtung mittels eines speziellen Befestigungsmittels befestigt. Das Befestigungsmittel ist so gestaltet, dass es zum einen das Tiermarkierungsband mit einer Ringform umgreifen kann, diese Ringform aber auch an ihrem Umfang geöffnet werden kann. Damit kann das Befestigungsmittel zum einen an dem Tiermarkierungsband weitgehend ortsfest angebracht werden und zum anderen von dem Tiermarkierungsband leicht gelöst werden. Das Lösen der Tiermarkierungsvorrichtung erfolgt durch Öffnen des Befestigungsmittels, insbesondere von dessen Ringform. Mit dem Öffnen entsteht eine den Umfang der Ringform unterbrechende Öffnung. Durch diese Öffnung in der Ringform kann das Tiermarkierungsband bewegt und so die Tiermarkierungsvorrichtung an das Tiermarkierungsband angesetzt und von diesem wieder abgenommen werden. Die erfindungsgemäße Tiermarkierungsvorrichtung ist mit ihrem Befestigungsmittel somit an einem Tiermarkierungsband einfach und schnell anbringbar oder entfernbar.

Das erfindungsgemäße Tiermarkierungsband ist insbesondere als ein Halsband mit einem Band bzw. Gurt aus Textilgewebe gestaltet. Dieses Band ist vorzugsweise in seiner Querausdehnung flach und weist eine begrenzte Breite auf. Das Band ist hinsichtlich seiner Längserstreckung bzw. Längsausdehnung so lang gestaltet, dass es z.B. den Hals eines zugehörigen Tieres angemessen umschließen kann. An einem Anfangsbereich seiner Längsausdehnung ist das Band vorzugsweise mit einer Verschlusseinrichtung ausgestattet. Mit dem Verschließen dieser Verschlusseinrichtung ist das Tiermarkierungsband dann dauerhaft an einem zugehörigen Tier zu befestigen.

Erfindungsgemäß ist die Ringform des Befestigungsmittels mit einem ersten Teilelement und einem zweiten Teilelement gebildet, die in bevorzugter Weise voneinander vollständig trennbar sind. Ein solches vollständiges Trennen bzw. Teilen der Ringform des erfindungsgemäßen Befestigungsmittels ermöglicht ein Zerlegen der Ringform in vorzugsweise zwei Elemente. Die Teilung kann vorteilhaft so erfolgen, dass sich zwei einfach zu produzierende Gleichteile ergeben. An den beiden Teilelementen ist vorzugsweise je ein Symbol für eine Markierung des zugehörigen Tieres angebracht. Das Symbol ist beispielsweise eine Zahl oder ein Buchstabe. Mit zwei Symbolen an beiden Teilelementen ist selbst bei einem Verdrehen des Tiermarkierungsbandes eines der Symbole jederzeit sichtbar. Demgegenüber besteht bei bekannten Tiermarkierungsvorrichtungen, die nur ein Symbol an einer Seite der Tiermarkierungsvorrichtung aufweisen, die Problematik, dass das Tiermarkierungsband verdreht ist, dann das Symbol auf der dem Tier zugewandten Seite liegt und damit nicht sichtbar ist.

Die Teilelemente können aber auch als unterschiedliche Teile gestaltet sein, die dann vielfältige, einfach herzustellende Variationen in der Zusammenstellung des Befestigungsmittels erlauben. Das eine Teilelement kann ferner gezielt als ein Rückenteil bzw. Verschlussteil und das zweite Teilelement als ein Vorderteil bzw. Anzeigeteil gestaltet sein.

Da die Teilelemente vollständig getrennt sind, können sie besonders einfach gereinigt werden. Mit dem Zusammenfügen der Teilelemente kann am Tiermarkierungsband dann gezielt an der Endposition der Tiermarkierungsvorrichtung eine Klemmwirkung erreicht werden.

Das erste Teilelement ist vorzugsweise als eine weitgehend ebene erste Platte sowie das zweite Teilelement als eine weitgehend ebene zweite Platte gestaltet, wobei die beiden Platten im am Tiermarkierungsband befestigten Zustand sich im Wesentlichen parallel zueinander erstrecken. Die beiden, als ebene Platten gestalteten Teilelemente tragen nicht auf. Sie legen sich flach an das Tiermarkierungsband an. Dies ist insbesondere für jenes Teilelement von Vorteil, dass sich im am Tier angebrachten Zustand zwischen dem Tiermarkierungsband und dem Tier selbst befindet. Dieses Teilelement legt sich dann vorteilhaft am Tier an und ist für das Tier aufgrund seiner geringen Dicke und des sich damit ergebenden, geringen Platzbedarfs nicht störend. Wenn sich ein derartiges Teilelement auf der vom Tier abgewandten Seite des Tiermarkierungsbandes befindet, verhindert die Plattenform, dass das Tier sich mit der Tiermarkierungsvorrichtung an einem Hindernis verhaken könnte. Zwischen den beiden plattenförmigen Teilelementen wird ferner das in der Regel streifenförmige Tiermarkierungsband vorteilhaft aufgenommen.

Erfindungsgemäß bevorzugt weist das erste Teilelement eine erste Innenfläche sowie das zweite Teilelement eine zweite Innenfläche auf. Die beiden Innenflächen sind dazu angepasst, das Tiermarkierungsband zwischen sich mittels Reibschluss zu klemmen. Ein Reibschluss wird insbesondere dadurch erreicht, dass die jeweilige Innenfläche rau gestaltet ist. Zusätzlich zu einer Oberflächenrauheit ist eine Anpresskraft von dem jeweiligen Teilelement auf das Tiermarkierungsband vorteilhaft. Die Anpresskraft entsteht insbesondere mittels einer geringfügigen elastischen Verformung der beiden Teilelemente beim Befestigen der Tiermarkierungsvorrichtung an dem Tiermarkierungsband. Die sich damit ergebende Klemmwirkung des Reibschlusses verhindert vorteilhaft ein Verrutschen der Tiermarkierungsvorrichtung selbst bei einer heftigen Tierbewegung.

Ferner ist vorteilhaft mindestens eine der Innenflächen mit mindestens einem von der Innenfläche abstehenden Sperrsteg versehen. Dieser Sperrsteg erzeugt einen zusätzlichen Reibschluss zwischen dem Tiermarkierungsband und der Tiermarkierungsvorrichtung. Der Sperrsteg erstreckt sich bevorzugt quer zur Längserstreckung des zugehörigen Tiermarkierungsbandes und verhindert so ein Verrutschen der Tiermarkierungsvorrichtung in Richtung dieser Längserstreckung. Ein solcher Sperrsteg kann auch in Form einer oder mehrerer Sperrnoppen gestaltet sein.

In bevorzugter Weise ist an der ersten Innenfläche sowie an der zweiten Innenfläche je mindestens ein Sperrsteg derart vorgesehen, dass in einer ersten Anordnung der beiden Teilelemente die Sperrstege einander gegenüberliegend angeordnet sind. Bei einer zweiten, um 180° verdrehten Anordnung der beiden Teilelemente sind die Sperrstege hingegen einander nicht gegenüberliegend angeordnet. Die derartigen Teilelemente weisen also jeweils mehrere Sperrstege auf. Diese Sperrstege können, einander gegenüberliegend, eine starke Klemmwirkung erzeugen oder aber, einander nicht gegenüberliegend, weniger stark klemmend wirken. Die beiden Anordnungen der Teilelemente entstehen dadurch, dass die Teilelemente relativ zu einander unterschiedlich angeordnet werden. Insbesondere können die beiden Teilelemente relativ zu einander unterschiedlich verdreht sein. Der Reibschluss bzw. die Klemmung kann so mit der Anordnung der Teilelemente und deren Sperrstegen variiert werden. Vorteilhaft können so auch unterschiedliche Dicken verschiedener Tiermarkierungsbänder berücksichtigt werden. Bei einem Drehversatz der beiden Teilelemente mit einer Drehung um 180° können die beiden Teilelemente und deren Stege dennoch als Gleichteile gestaltet sein. Vorzugsweise sind drei Sperrstege an einer Innenfläche auf zwei Hälften der Innenfläche verteilt angeordnet. Dabei sind zwei Sperrstege an einer Hälfte der Innenfläche in Längsrichtung des zugehörigen Tiermarkierungsbandes voneinander beabstandet angeordnet. Der dritte Sperrsteg ist an der anderen Hälfte der Innenfläche mittig in Bezug zu den ersten beiden Sperrstegen angeordnet. Bei einer ersten Anordnung der derartigen Teilelemente liegen dann alle drei Sperrstege der beiden Innenflächen einander gegenüber. Dies ist bei einem vergleichsweise dünnen Tiermarkierungsband vorteilhaft. Bei einer zweiten Anordnung der derartigen Teilelemente liegt je der mittige Sperrsteg der einen Innenfläche zwischen den beiden voneinander in Längsrichtung beabstandeten Sperrstegen der gegenüberliegenden, anderen Innenfläche. Diese Anordnung der beiden Teilelemente ist bei einem vergleichsweise dicken Tiermarkierungsband vorteilhaft.

Erfindungsgemäß ist ferner, wenn das erste Teilelement einen Randbereich aufweist, an dem mindestens ein erster Zahn ausgebildet ist, und das zweite Teilelement einen Randbereich aufweist, an dem mindestens zwei zweite Zähne ausgebildet sind. Die Zähne sind dabei derart gestaltet, dass im an das Tiermarkierungsband befestigten Zustand der erste Zahn zwischen die beiden zweiten Zähne eingreift. Die derart mittels der Zähne gebildete Verzahnung bildet eine formschlüssige Verbindung zwischen den beiden Teilelementen aus. Mit dieser formschlüssigen Verbindung sind die beiden Teilelemente ortsfest und dauerhaft stabil relativ zueinander positioniert. Diese Positionierung ermöglicht zugleich eine einfache Montage der beiden Teilelemente, indem die Zähne ineinanderzufügen sind.

Ferner sind erfindungsgemäß die mindestens drei Zähne je mit einer Öffnung versehen, in die im an das Tiermarkierungsband befestigten Zustand ein Stift einzuschieben bzw. eingeschoben ist. Das Einschieben des Stiftes verbindet die Teilelemente und bildet zugleich mit den Zähnen eine formschlüssige Verbindung, welche ein Auseinanderbewegen der Zähne verhindert. Die Zähne können mit dem eingeschobenen Stift darüber hinaus auch eine Scharnierverbindung bilden, mittels der die Zähne relativ zueinander um den Stift geschwenkt werden können. Der Stift erstreckt sich dabei im montierten Zustand bevorzugt in Längsrichtung des Tiermarkierungsbandes. Vorteilhaft verbindet ferner ein Einschieben eines zweiten Stiftes die Teilelemente zusätzlich in einem zweiten Bereich. Der zweite Bereich ist bevorzugt ebenfalls eine Verzahnung mehrerer Zähne, die sich dann an einem zweiten Randbereich der Tiermarkierungsvorrichtung befinden. Der zweite Randbereich liegt bei einer rechteckig gestalteten Tiermarkierungsvorrichtung bevorzugt dem erstgenannten Randbereich gegenüber. Der zweite Stift erstreckt sich im montierten Zustand bevorzugt ebenfalls in Längsrichtung des zugehörigen Tiermarkierungsbandes. Die Öffnungen in den Zähnen sind bevorzugt derart an die jeweilige Querschnittsform der dort angeordneten Stifte angepasst, dass sich zwischen Zahn und Stift eine Klemmwirkung ergibt, mittels der der Stift in der Öffnung zurückgehalten ist. Alternativ zu einem zweiten Stift kann zwischen den beiden Teilelementen auch eine Art Scharnierverbindung mittels eines biegbaren Abschnittes gebildet sein. Der biegbare Abschnitt verbindet dann die beiden Teilelemente an einem ihrer Randbereiche. Am biegbaren Abschnitt können die Teilelemente relativ zu einander geschwenkt werden. So kann die Ringform des Befestigungsmittels geöffnet oder geschlossen werden. Die Verriegelung der Ringform und auch die Klemmverbindung mit dem zugehörigen Tiermarkierungsband erfolgt dann bevorzugt mittels nur eines Stiftes.

Erfindungsgemäß bevorzugt sind ferner die genannten Stifte mittels nur einer Stiftklammer gebildet, die mit zwei im Wesentlichen parallelen Stiften und einem diese beiden Stifte verbindenden Querbügel gestaltet ist. Der Querbügel und die beiden Stifte bilden eine U-förmige, einstückige Stiftklammer aus. Der Querbügel erstreckt sich im montierten Zustand im Wesentlichen quer zur Längsrichtung des zugehörigen Tiermarkierungsbandes. Die Stifte sind dann in Längsrichtung des Tiermarkierungsbandes ausgerichtet und verbinden die beiden Teilelemente ja an einem von deren Randbereichen. Die beiden Teilelemente werden so bevorzugt an zweit gegenüberliegenden Rändern bzw. Seiten des Tiermarkierungsbandes mittels der Stiftklammer verbunden. Der Querbügel der Stiftklammer ist dabei vorteilhaft derart gekröpft gestaltet, dass er den Verlauf des Tiermarkierungsbandes innerhalb der Tiermarkierungsvorrichtung im montierten Zustand nicht stört.

Um die Stiftklammer gegen ein Herausgleiten zusätzlich zu sichern, ist es vorteilhaft, über der Stiftklammer einen Wulst bzw. eine Raste bzw. Klinke vorzusehen, die sich über die Stiftklammer, insbesondere über deren Querbügel erstreckt. Der Wulst ist dazu bevorzugt an einem der beiden Teilelemente angeordnet, insbesondere einstückig mit angespritzt.

Vorzugsweise befindet sich ferner im am Tiermarkierungsband befestigten Zustand unter dem Querbügel der Stiftklammer im benachbarten Teilelement eine Aussparung. In diese Aussparung kann von einem Benutzer der erfindungsgemäßen Tiermarkierungsvorrichtung ein Hebelwerkzeug eingesetzt werden, mittels dem dann die Stiftklammer aus den Teilelementen herausgezogen werden kann. Die Aussparung kann zugleich als gezielte Lagemarkierung an der Tiermarkierungsvorrichtung dienen. Mit einer solchen Lagemarkierung sind beispielhaft an der Tiermarkierungsvorrichtung die Zahlen "6" und "9" hinsichtlich ihrer Lage zu unterscheiden. Die Aussparung kann auch für eine Gleichteil-Gestaltung beider Teilelemente an beiden Teilelementen vorgesehen sein.

### Kurzbeschreibunq der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine perspektivische Ansicht einer erfindungsgemäßen Tiermarkierungsvorrichtung im geschlossenen Zustand mit einem ersten und einem zweiten Teilelement sowie dem zugehörigen Tiermarkierungsband und
- Fig. 2: eine perspektivische Innenansicht allein des ersten Teilelements der Tiermarkierungsvorrichtung gemäß Fig. 1 sowie einem Teil des zugehörigen Tiermarkierungsbandes.

### Detaillierte Beschreibung des Ausführunqsbeispiels

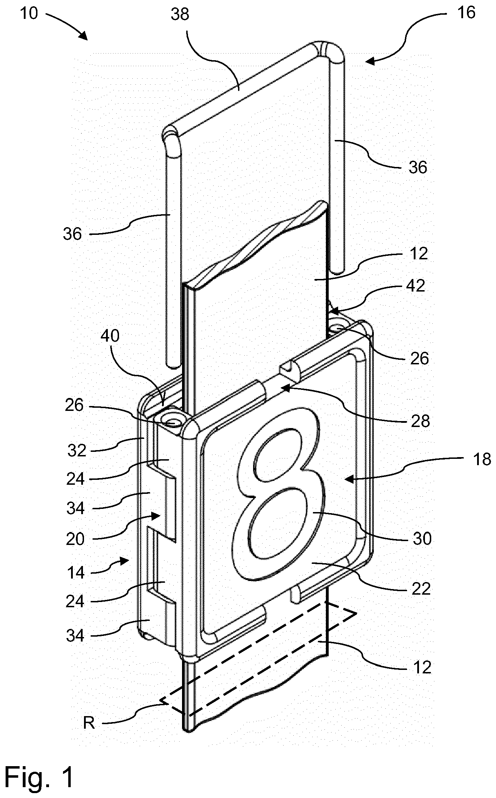

In der Fig. 1 ist eine Tiermarkierungsvorrichtung 10 an einem länglichen, streifenförmigen, flachen Tiermarkierungsband 12 im geschlossenen, unverriegelten Zustand gezeigt. Die Tiermarkierungsvorrichtung 10 ist gebildet aus einem Befestigungsmittel 14, das eine insgesamt U-förmige Stiftklammer 16 aufweist. Das Befestigungsmittel 14 setzt sich ferner aus einem ersten Teilelement 18 und aus einem zweiten Teilelement 20 zusammen. Die beiden Teilelemente 18 und 20 bilden im aneinander angelegten Zustand zusammen eine Ringform R aus, welche sich um das Tiermarkierungsband 12 herum in einer geschlossenen Umfangslinie erstreckt.

Das erste Teilelement 18 ist mit einer ersten, im Wesentlichen rechteckigen, aus Kunststoff mittels Spritzguss hergestellten Platte 22 gebildet, an der erste Zähne 24 ausgebildet sind. Durch die Zähne 24 hindurch erstrecken sich Öffnungen 26. Die Zähne 24 stehen von der ersten Platte 22 an zwei gegenüberliegenden Rändern bzw. Randbereichen ab und erstrecken sich dabei geringfügig in Längsrichtung des Tiermarkierungsbands 12. Die Öffnungen 26 erstrecken sich in Längsrichtung des Tiermarkierungsbandes 12 durch die Zähne 24 hindurch, so dass sich insgesamt eine Durchgangsöffnung ergibt. In diese Durchgangsöffnung ist im in Fig. 1 dargestellten Zustand die Stiftklammer 16 zum Verriegeln und Sperren der Tiermarkierungsvorrichtung 10 am Tiermarkierungsband 12 einzuschieben.

An der ersten Platte 22 ist an einem bezogen auf die Fig. 1 oberen Randbereich eine Aussparung 28 ausgebildet. Auf der ersten Platte 22 ist ferner außenseitig und zentral bzw. mittig ein Markierungssymbol 30 angebracht. Dieses Markierungssymbol 30, vorliegend eine Nummer, ist erhaben, versenkt oder oberflächengleich, bevorzugt im Mehrkomponenten-Spritzgießverfahren, ausgebildet.

Das zweite Teilelement 20 ist, wie das erste Teilelement 18, mit einer zweiten Platte 32 und mit zweiten Zähnen 34 gebildet. Die zweiten Zähne 34 sind wie die Zähne 24 bei dem ersten Teilelement 18 angeordnet und weisen ebenfalls Öffnungen 26 auf. Das zweite Teilelement 20 ist dabei als Gleichteil zum ersten Teilelement 18 gestaltet, es ist also baugleich zu diesem. Entsprechend weist auch das zweite Teilelement 20 eine Aussparung 28 und ein Markierungssymbol 30 auf. Die beiden derart als Gleichteile gestalteten Teilelemente 18 und 20 werden zum Anbringen an dem Tiermarkierungsband 12 an beiden Seiten von diesem wechselseitig zueinander mit ihren Platten 22 und 32 angelegt. Ihre Zähne 24 und 34 greifen dann neben dem Tiermarkierungsband 12 ineinander. In der derartigen, in Fig. 1 dargestellten Lage, kann dann durch die Öffnungen 26 hindurch, wie erwähnt, die Stiftklammer 16 eingeschoben und auf diese Weise eine verriegelte Ringform des Befestigungsmittels 14 um das Tiermarkierungsband 12 herum ausgebildet werden.

Die Stiftklammer 16 ist dabei aus zwei sich parallel zueinander erstreckenden Stiften 36 und einem Querbügel 38 gebildet. Beim Einschieben der Stiftklammer 16 wird ein Stift 36 der Stiftklammer 16 bezogen auf Fig. 1 von oben in die Öffnung 26 des ersten Zahnes 24 des ersten Teilelements 18 eingeführt. Der Stift 36 durchdringt den Zahn 24 und wird anschließend in den zweiten Zahn 34 des zweiten Teilelementes 20 eingeführt. Es folgen dann nochmals ein erster Zahn 24 und ein zweiter Zahn 34. Mit dem Einschieben des Stiftes 36 bildet sich so zwischen den Zähnen 24 und 34 eine formschlüssige Verbindung.

Die Stiftklammer 16 ist soweit einzuschieben, bis der Querbügel 38 an einer stirnseitigen Randfläche 40 in einem dort ausgebildeten Falz 42 des ersten Teilelementes 18 anschlägt. Dann ist mit der Stiftklammer 16 das Befestigungsmittel 14 vollständig verriegelt.

Um die Verriegelung zu öffnen, ist die Stiftklammer 16 mit einem nicht dargestellten Öffnungswerkzeug anzuheben. Dabei wird das Öffnungswerkzeug in die Aussparung 28 eingesetzt und mit einer Hebelbewegung die Stiftklammer 16 aus den Öffnungen 26 herausgezogen.

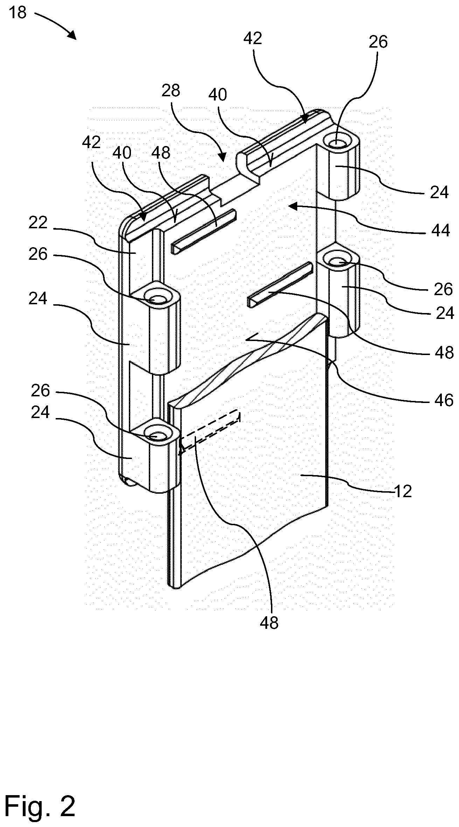

Fig. 2. zeigt das erste Teilelement 18 mit dessen Innenseite 44 sowie teilweise das zugehörige Tiermarkierungsband 12. Die Innenseite 42 des ersten Teilelements 18 ist mit einer im Wesentlichen ebenen Innenfläche 46 gestaltet, an der bezogen auf die Längserstreckung des Tiermarkierungsbandes 12 am linken und rechten Randbereich die Zähne 24 angeordnet sind. Innerhalb der Innenfläche 46 sind an deren linken Hälfte ferner zwei, sich quer zur Längserstreckung erstreckende Sperrstege 48 ausgebildet. Darüber hinaus ist an der rechten Hälfte bezogen auf die Längserstreckung mittig zwischen den beiden letztgenannten Sperrstegen 48 ein weiterer Sperrsteg 48 ausgebildet. Die Sperrstege 48 stehen nach innen hin, in Richtung des Tiermarkierungsbandes 12 von der Innenseite 44 ab. Sie bilden so eine zusätzliche Klemmwirkung auf das Tiermarkierungsband 12, wenn dieses zwischen den beiden Teilelementen 18 und 20 eingeschlossen ist. Je nach Anordnung des zweiten Teilelements 20 an dem ersten Teilelement 18 verändert sich auch die Anordnung der Sperrstege 48 der beiden Teilelemente 18 und 20 relativ zueinander. In einer ersten Anordnung sind die Sperrstege 48 des ersten und des zweiten Teilelements 18 und 20 zueinander versetzt, so wie es bei der Anordnung gemäß Fig. 1 der Fall ist.

Bei einer zweiten, um 180° verdrehten Anordnung des zweiten Teilelements 20 an dem ersten Teilelement 18 liegen die Sperrstege 48 der beiden Teilelemente 18 und 20 einander unmittelbar gegenüber.

### Bezugszeichenliste

- 10: Tiermarkierungsvorrichtung
- 12: Tiermarkierungsband
- 14: Befestigungsmittel
- 16: Stiftklammer
- 18: erstes Teilelement
- 20: zweites Teilelement
- 22: erste Platte
- 24: erster Zahn
- 26: Öffnung
- 28: Aussparung
- 30: Markierungssymbol
- 32: zweite Platte
- 34: zweiter Zahn
- 36: Stift
- 38: Querbügel
- 40: Randfläche
- 42: Falz
- 44: Innenseite
- 46: Innenfläche
- 48: Sperrsteg

## Patentansprüche

1. Tiermarkierungsvorrichtung (10) für ein Tiermarkierungsband (12) mit einem Befestigungsmittel (14) zum Befestigen der Tiermarkierungsvorrichtung (10) am Tiermarkierungsband (12), bei der das Befestigungsmittel (14) eine Ringform (R) aufweist, um damit das Tiermarkierungsband (12) zu umschließen, wobei die Ringform (R) des Befestigungsmittels (14) an ihrem Umfang wahlweise zu öffnen ist und die Ringform (R) des Befestigungsmittels (14) mit einem ersten Teilelement (18) und einem zweiten Teilelement (20) gebildet ist,
wobei das erste Teilelement (18) einen Randbereich aufweist, an dem mindestens ein erster Zahn (24) ausgebildet ist, und das zweite Teilelement (20) einen Randbereich aufweist, an dem mindestens zwei zweite Zähne (34) ausgebildet sind, derart, dass im an das Tiermarkierungsband (12) befestigten Zustand der erste Zahn (24) zwischen die beiden zweiten Zähne (34) eingreift,
**dadurch gekennzeichnet, dass** die mindestens drei Zähne (24, 34) je mit einer Öffnung (26) versehen sind, in die im an das Tiermarkierungsband (12) befestigten Zustand ein Stift (36) eingeschoben ist, wobei die Öffnungen in den Zähnen (24, 34) derart an die jeweilige Querschnittsform des dort angeordneten Stiftes (36) angepasst sind, dass sich zwischen Zahn (24, 34) und Stift (36) eine Klemmwirkung ergibt, mittels der der Stift (36) in der Öffnung zurückgehalten ist.

2. Tiermarkierungsvorrichtung nach Anspruch 1,
**dadurch gekennzeichnet, dass** das erste Teilelement (18) und das zweite Teilelement (20) voneinander vollständig trennbar sind.

3. Tiermarkierungsvorrichtung nach Anspruch 2,
**dadurch gekennzeichnet, dass** das erste Teilelement (18) als eine weitgehend ebene erste Platte (22) sowie das zweite Teilelement (20) als eine weitgehend ebene zweite Platte (32) gestaltet ist, und die beiden Platten (22, 32) im am Tiermarkierungsband (12) befestigten Zustand sich im Wesentlichen parallel zueinander erstrecken.

4. Tiermarkierungsvorrichtung nach Anspruch 2 oder 3,
**dadurch gekennzeichnet, dass** das erste Teilelement (18) eine erste Innenfläche (46) sowie das zweite Teilelement (20) eine zweite Innenfläche aufweist und die beiden Innenflächen (46) dazu angepasst sind, das Tiermarkierungsband (12) zwischen sich mittels Reibschluss zu klemmen.

5. Tiermarkierungsvorrichtung nach Anspruch 4,
**dadurch gekennzeichnet, dass** mindestens eine der Innenflächen (46) mit mindestens einem von der Innenfläche (46) abstehenden Sperrsteg (48) versehen ist.

6. Tiermarkierungsvorrichtung nach Anspruch 4 oder 5,
**dadurch gekennzeichnet, dass** an der ersten Innenfläche (46) sowie an der zweiten Innenfläche je mindestens ein Sperrsteg (48) derart vorgesehen ist, dass in einer ersten Anordnung der beiden Teilelemente (18, 20) die Sperrstege (48) einander gegenüberliegend angeordnet sind und bei einer zweiten, um 180° verdrehten Anordnung der beiden Teilelemente (18, 20) die Sperrstege (48) einander nicht gegenüberliegend angeordnet sind.

7. Tiermarkierungsvorrichtung nach Anspruch 6,
**dadurch gekennzeichnet, dass** der Stift (36) mittels einer Stiftklammer (16) gebildet ist, die mit zwei im Wesentlichen parallelen Stiften (36) und einem diese beiden Stifte (36) verbindenden Querbügel (38) gestaltet ist.

8. Tiermarkierungsvorrichtung nach Anspruch 7,
**dadurch gekennzeichnet, dass** im am Tiermarkierungsband (12) befestigten Zustand unter dem Querbügel (38) der Stiftklammer (16) sich im benachbarten Teilelement eine Aussparung (28) befindet.

## Claims

1. Animal marking device (10) for an animal marking band (12) having a fastening means (14) for fastening the animal marking device (10) to the animal marking band (12), in which the fastening means (14) has a ring shape (R) in order thus to enclose the animal marking band (12), wherein the ring shape (R) of the fastening means (14) is selectively to be opened at its periphery and the ring shape (R) of the fastening means (14) is formed by a first part-element (18) and a second part-element (20),
wherein the first part-element (18) has an edge region on which at least one first tooth (24) is formed, and the second part-element (20) has an edge region on which at least two second teeth (34) are formed, so that, in the state fastened to the animal marking band (12), the first tooth (24) engages between the two second teeth (34), **characterised in that** the at least three teeth (24, 34) are each provided with an opening (26) into which a pin (36) is inserted in the state fastened to the animal marking band (12), wherein the openings in the teeth (24, 34) are so matched to the cross-sectional shape of the pin (36) arranged there that a clamping action is obtained between the tooth (24, 34) and the pin (36), by means of which clamping action the pin (36) is retained in the opening.

2. Animal marking device according to claim 1,
**characterised in that** the first part-element (18) and the second part-element (20) are completely separable from one another.

3. Animal marking device according to claim 2,
**characterised in that** the first part-element (18) is in the form of a largely flat first plate (22) and the second part-element (20) is in the form of a largely flat second plate (32), and the two plates (22, 32) extend substantially parallel to one another in the state fastened to the animal marking band (12).

4. Animal marking device according to claim 2 or 3,
**characterised in that** the first part-element (18) has a first inner surface (46) and the second part-element (20) has a second inner surface, and the two inner surfaces (46) are adapted to clamp the animal marking band (12) between them by means of friction.

5. Animal marking device according to claim 4,
**characterised in that** at least one of the inner surfaces (46) is provided with at least one locking fin (48) protruding from the inner surface (46).

6. Animal marking device according to claim 4 or 5,
**characterised in that** at least one locking fin (48) is provided on each of the first inner surface (46) and the second inner surface, so that in a first arrangement of the two part-elements (18, 20), the locking fins (48) are arranged opposite one another and in a second arrangement, rotated through 180°, of the two part-elements (18, 20), the locking fins (48) are not arranged opposite one another.

7. Animal marking device according to claim 6,
**characterised in that** the pin (36) is formed by means of a pin clip (16) which is formed with two substantially parallel pins (36) and a cross-piece (38) connecting the two pins (36).

8. Animal marking device according to claim 7,
**characterised in that**, in the state fastened to the animal marking band (12), there is a gap (28) in the adjacent part-element beneath the cross-piece (38) of the pin clip (16).

## Revendications

1. Dispositif de marquage d'animaux (10) pour une bande de marquage d'animaux (12) avec un moyen de fixation (14) pour la fixation du dispositif de marquage d'animaux (10) à la bande de marquage d'animaux (12), dans lequel le moyen de fixation (14) présente une forme annulaire (R) pour ainsi entourer la bande de marquage d'animaux (12), la forme annulaire (R) du moyen de fixation (14) s'ouvrant optionnellement au niveau de sa périphérie et la forme annulaire (R) du moyen de fixation (14) étant formée avec un premier élément partiel (18) et un deuxième élément partiel (20) ;
le premier élément partiel (18) comportant une zone de bordure au niveau de laquelle au moins une première dent (24) est réalisée et le deuxième élément partiel (20) comportant une zone de bordure au niveau de laquelle au moins deux deuxièmes dents (34) sont réalisées, de telle sorte que dans l'état fixé à la bande de marquage d'animaux (12), la première dent (24) s'imbrique entre les deux deuxièmes dents (34);
**caractérisé en ce que** les au moins trois dents (24, 34) sont respectivement pourvues d'une ouverture (26) dans laquelle une pointe (36) est insérée dans l'état fixé à la bande de marquage d'animaux (12), les ouvertures étant adaptées de telle sorte dans les dents (24, 34) au niveau de la forme en section transversale respective de la pointe (36) disposée à cet endroit qu'un effet de serrage se produit entre la dent (24, 34) et la pointe (36), cet effet permettant de retenir la pointe (36) dans l'ouverture.

2. Dispositif de marquage d'animaux selon la revendication 1, **caractérisé en ce que** le premier élément partiel (18) et le deuxième élément partiel (20) peuvent entièrement être séparés l'un de l'autre.

3. Dispositif de marquage d'animaux selon la revendication 2, **caractérisé en ce que** le premier élément partiel (18) est réalisé sous la forme d'une première plaque (22) largement plane et le deuxième élément partiel (20) est réalisé sous la forme d'une deuxième plaque (32) largement plane et que les deux plaques (22, 32) s'étendent, dans l'état fixé à la bande de marquage d'animaux (12), pour l'essentiel parallèlement l'une par rapport à l'autre.

4. Dispositif de marquage d'animaux selon la revendication 2 ou 3, **caractérisé en ce que** le premier élément partiel (18) comporte une première surface intérieure (46) et le deuxième élément partiel (20) présente une deuxième surface intérieure et que les deux surfaces intérieures (46) sont adaptées pour serrer entre elles la bande de marquage d'animaux (12) par complémentarité de frottements.

5. Dispositif de marquage d'animaux selon la revendication 4, **caractérisé en ce qu'**au moins une des surfaces intérieures (46) est pourvue d'au moins un talon de verrouillage (48) saillant hors de la surface intérieure (46).

6. Dispositif de marquage d'animaux selon la revendication 4 ou 5, **caractérisé en ce que** respectivement au moins un talon de verrouillage (48) est prévu de telle sorte au niveau de la première surface intérieure (46) et au niveau de la deuxième surface intérieure que dans un premier agencement des deux éléments partiels (18, 20), les talons de verrouillage (48) soient disposés de façon opposée l'un par rapport à l'autre et qu'un cas de deuxième agencement tourné de 180° des deux éléments partiels (18, 20), les talons de verrouillage (48) ne soient pas disposés de façon opposée.

7. Dispositif de marquage d'animaux selon la revendication 6, **caractérisé en ce que** la pointe (36) est formée à l'aide d'une bride de tige (16) réalisée avec deux tiges (36) pour l'essentiel parallèles et avec un étrier transversal (38) reliant ces deux tiges (36).

8. Dispositif de marquage d'animaux selon la revendication 7, **caractérisé en ce qu'**à l'état fixé à la bande de marquage d'animaux (12), un évidement (28) se trouve dans l'élément partiel connexe, sous l'étrier transversal (38) de la bride de tige (16).
